# EUROPÄISCHE PATENTSCHRIFT

(11) **EP 2 504 575 B1**
(45) Veröffentlichungstag und Bekanntmachung des Hinweises auf die Patenterteilung: **26.11.2014**
(21) Anmeldenummer: 10773005.3
(22) Anmeldetag: 14.10.2010
(51) Int. Cl.: F03D 11/00, F24J 3/08

(54) **Windkraftanlage und Verfahren zur Temperaturregulierung mindestens einer Komponente einer Windkraftanlage**
Wind power plant and method for temperature regulation of at least one component of a wind power plant
Éolienne et procédé de régulation de température d'au moins un composant d'éolienne

(30) Priorität: 25.11.2009 DE 102009055784
(43) Veröffentlichungstag der Anmeldung: 03.10.2012
(73) Patentinhaber: Siemens Aktiengesellschaft, 80333 München (DE)
(72) Erfinder: BENITEZ SANCHEZ, Ana, Maria, 52353 Düren (DE); FRITZSCHE, Guido, 90763 Fürth (DE)
(86) Internationale Anmeldenummer: PCT/EP2010/065391
(87) Internationale Veröffentlichungsnummer: WO 2011/064040

(56) Entgegenhaltungen:
- WO-A2-2008/092449
- WO-A2-2008/102184
- US-A1- 2008 290 662
- US-A1- 2009 212 560

## Beschreibung

Die vorliegende Erfindung betrifft eine Windkraftanlage, welche mindestens eine bezüglich ihrer Temperatur zu regulierende Komponente und eine Vorrichtung zur Temperaturregulierung umfasst. Sie betrifft weiterhin einen Windpark und ein Verfahren zur Temperaturregulierung einer zu kühlenden oder zu erwärmenden Komponente einer Windkraftanlage.

In dem Dokument WO 2008/092449 A2 wird eine Windenergieanlage mit einer Klimaanlage zur Verringerung der Luftfeuchtigkeit im Inneren der Windturbine beschrieben. Die Klimaanlage umfasst eine Heizvorrichtung zum Erhitzen der Luft im Inneren der Windturbine. Die hierfür benötigte Wärme kann gewonnen werden aus beim Betrieb freigesetzter Wärme von anderen Komponenten, beispielsweise dem Getriebe, oder Erdwärme. Darüber hinaus kann die von anderen Komponenten freigesetzte Wärme gespeichert und beispielsweise zum Vorheizen von bestimmten Komponenten vor der Inbetriebnahme verwendet werden.

Das Dokument WO 2008/102184 A2 offenbart eine Vorrichtung zum Kühlen von Windturbinenkomponenten mithilfe eine Kühlflüssigkeit.

Das Dokument US 2009/212560 A1 beschreibt die Nutzung von während des Betriebes einer Windturbine frei werdender Wärme zur Gebäudeheizung.

In dem Dokument US 2008/0290662 A1 ist ein Klimatisierungssystem für Windturbinen beschrieben. Das Klimatisierungssystem umfasst einen ersten Wärmetauscher in der Windturbinengondel, welcher in thermischem Kontakt mit einem Element der Gondel steht, dessen Temperatur zu regulieren ist. Ein zweiter Wärmetauscher befindet sich außerhalb der Gondel und steht im thermischen Kontakt mit einer ersten Austauschein heit. Ein Klimatisierungskreislauf verbindet den ersten Wärmetauscher mit dem zweiten Wärmetauscher, wobei ein zirkulierendes flüssiges Kühlmedium durch den Klimatisierungskreislauf hindurchgeleitet wird.

Die Temperaturregulierung in einer Windkraftanlage ist aufgrund der sich verändernden Umgebungsbedingungen und Betriebsbedingungen der Windkraftanlage sehr komplex. Darüber hinaus variiert die Erwärmung der verschiedenen Komponenten der Windkraftanlage in Abhängigkeit von der Energieproduktion. Die verschiedenen Komponenten sind jeweils für einen bestimmten Temperaturbereich ausgelegt. Das bedeutet, dass die Komponenten im Falle einer zu starken Erwärmung während der Stromerzeugung gekühlt werden müssen. Zudem spielt die Umgebungstemperatur eine entscheidende Rolle. So müssen die Turbinen bei kalten oder arktischen Temperaturen erwärmt werden, in heißen Gegenden müssen sie hingegen gekühlt werden.

Im Rahmen der derzeit verwendeten Lösungen werden Wärme abgebende Komponenten gekühlt, während dieselben Komponenten während kalter Zeiten, insbesondere kalter Jahreszeiten, möglicherweise erwärmt werden müssen. Dies ist energie- und kostenintensiv.

Vor diesem Hintergrund ist es technisch wünschenswert, verschiedene Komponenten der Windkraftanlage gleichzeitig zu kühlen beziehungsweise zu erwärmen, um sie jeweils innerhalb ihres Betriebstemperaturbereiches zu halten. Bisher wird dies typischerweise mit Hilfe von verschiedenen elektrischen Heizern in den jeweiligen Komponenten oder in Bereichen wie der Windkraftanlagengondel oder dem Windkraftanlagenturm er reicht. Mitunter wird auch warme Luft in die kalten Komponenten hinein geblasen. Weiterhin erfolgt eine Kühlung auch mit Hilfe von Ventilatoren oder durch Verwendung von Öffnungen, insbesondere Kühllöchern, oder Kühlwasserleitungen.

Es ist daher eine erste Aufgabe der vorliegenden Erfindung, eine vorteilhafte Windkraftanlage zur Verfügung zu stellen. Eine zweite Aufgabe der vorliegenden Erfindung besteht darin, einen vorteilhaften Windpark zur Verfügung zu stellen. Eine dritte Aufgabe der vorliegenden Erfindung besteht darin, ein vorteilhaftes Verfahren zur Temperaturregulierung für eine Windkraftanlage zur Verfügung zu stellen.

Die erste Aufgabe wird durch eine Windkraftanlage nach Anspruch 1 gelöst. Die zweite Aufgabe wird durch einen Windpark nach Anspruch 10 gelöst. Die dritte Aufgabe wird durch ein Verfahren zur Temperaturregulierung nach Anspruch 11 gelöst. Die abhängigen Ansprüche enthalten weitere, vorteilhafte Ausgestaltungen der Erfindung.

Die erfindungsgemäße Windkraftanlage umfasst mindestens eine bezüglich ihrer Temperatur zu regulierende Komponente und eine Vorrichtung zur Temperaturregulierung. Die Vorrichtung zur Temperaturregulierung umfasst weiterhin mindestens einen thermisch isolierten Fluidspeicher, mindestens ein Leitungssystem, welches den Fluidspeicher mit der mindestens einen Komponente verbindet, und eine Vorrichtung zum Transport eines Fluids durch das Leitungssystem. Dabei stehen die mindestens eine Komponente und das Leitungssystem miteinander in thermischer Verbindung.

Mit Hilfe der erfindungsgemäßen Windkraftanlage, insbesondere mit Hilfe der Vorrichtung zur Temperaturregulierung, kann die Wärme von verschiedenen Komponenten, wie dem Getriebe, in Form von warmem Wasser abgeführt und gespeichert werden. Das gespeicherte warme Wasser kann beispielsweise in kalten Jahreszeiten oder zu kalten Tageszeiten zur Erwärmung der jeweiligen Komponenten verwendet werden.

Bei der Vorrichtung zum Transport eines Fluids durch das Leistungssystem kann es sich beispielsweise um eine Pumpe handeln.

Zudem kann die mindestens eine Komponente für einen bestimmten Betriebstemperaturbereich ausgelegt sein. Das bedeutet, dass die Komponente nur innerhalb eines bestimmten Temperaturbereiches in Betrieb genommen und betrieben werden darf.

Das mindestens eine Leitungssystem kann vorteilhafterweise als Kreislauf ausgestaltet sein. Dies hat den Vorteil, dass die Temperaturregulierung mit einer vorgegebenen, festen Fluidmenge erreicht werden kann, ohne dass weiteres Fluid in die Vorrichtung eingespeist oder von dieser abgeführt werden muss. Zudem kann in diesem Fall mit Hilfe ein und desselben Kreislaufes die Kühlung und die Erwärmung der jeweiligen Komponenten ausgeführt werden. Bei dem verwendeten Fluid kann es sich um eine Flüssigkeit, vorteilhafterweise um Wasser, handeln.

Bei der mindestens einen Komponente der Windkraftanlage kann es sich beispielsweise um eine um eine Turbine, einen Turm, eine Gondel, ein Getriebe, ein Getriebegehäuse, eine Bremse, einen Generator, einen Frequenzumwandler, einen Motor, insbesondere einen Motor zur Rotorblattverstellung, einen Transformator, einen Gleichrichter, einen Filter oder eine sonstige Vorrichtung zur Frequenzregelung handeln.

Die Vorrichtung zur Temperaturregulierung umfasst darüber hinaus mindestens eine Wärmepumpe und/oder mindestens einen Erdwärmeübertrager. Dabei steht die mindestens eine Wärmepumpe und/oder der mindestens eine Erdwärmeübertrager in thermischer Verbindung mit dem Leitungssystem und/oder dem Fluidspeicher. Der Vorteil einer solchen Ausgestaltung besteht darin, dass insbesondere Erdwärme zur Erwärmung eines durch das Leitungssystem fließenden Fluids und damit zur Erwärmung der jeweiligen Komponente beziehungsweise der jewei ligen Komponenten verwendet werden kann. Umgekehrt ist es möglich auf diese Weise Wärme, die von einer Komponente auf das Leistungssystem beziehungsweise auf ein durch das Leitungssystem strömendes Fluid übertragen wurde, mit Hilfe des Erdwärmeübertragers an den Erdboden abzugeben.

Vorzugsweise kann der Erdwärmeübertrager als Erdwärmesonde oder als Erdwärmekollektor ausgestaltet sein. Die Erdwärmesonde hat den Vorteil, dass sie verhältnismäßig wenig Platz beansprucht. Dafür ist eine tiefe und möglicherweise aufwändige Bohrung erforderlich. Demgegenüber ist ein Erdwärmekollektor im Vergleich zu einer Erdwärmesonde einfacher zu installieren. Der Erdwärmekollektor nimmt jedoch eine vergleichsweise große Fläche ein.

Mit Hilfe der vorliegenden Erfindung kann die von Komponenten abgegebene Wärme gespeichert und später erforderlichenfalls zur Erwärmung der Komponenten verwendet werden. Das System beziehungsweise die Erfindung beinhaltet daher eine energiesparende und kostengünstige Lösung für eine Temperaturregulierung.

Die erfindungsgemäße Windkraftanlage kann insbesondere mindestens zwei Fluidspeicher umfassen. Dabei können die mindestens zwei Fluidspeicher eine unterschiedliche Größe aufweisen und/oder jeweils mit unterschiedlichen Fluiden gefüllt sein. Darüber hinaus kann die Windkraftanlage mindestens zwei voneinander unabhängige Leitungssysteme umfassen. Zum Beispiel kann jeder Fluidspeicher mit einem separaten Leitungssystem verbunden sein.

Da die Ausgestaltungen der Windkraftanlagen erheblich variieren, wie auch die Komponenten innerhalb der Turbine und das Umgebungsklima variieren, kann die erforderliche Wärme für einzelne Windkraftanlagen sehr unterschiedlich sein.

Vorteilhafterweise kann die zur Erwärmung der verschiedenen Komponenten während einer kalten Jahreszeit erforderliche Wärme zunächst abgeschätzt werden. In Abhängigkeit von der geschätzten Wärme können die Größe und die Eigenschaften des Fluidspeichers sowie das zu verwendende Fluid gewählt werden.

Beispielsweise kann die Vorrichtung zur Temperaturregulierung einen ersten und einen zweiten Fluidspeicher umfassen, die jeweils mit einem separaten Leitungssystem verbunden sind. Dabei ist der erste Fluidspeicher größer als der zweite Fluidspeicher. Mit Hilfe des ersten, größeren Fluidspeichers kann die Temperaturregulierung abhängig von der jeweiligen Jahreszeit erfolgen. Mit Hilfe des zweiten, kleineren Fluidspeichers können Temperaturschwankungen im Verlaufe eines Tages ausgeglichen werden. Zum Beispiel kann mit Hilfe der im Verlaufe des Sommers an das Fluid abgegebenen Wärme das in dem ersten, größeren Fluidspeicher gespeicherte Fluid erwärmt werden. Diese gespeicherte Wärme kann im Winter zur Erwärmung der jeweiligen Komponenten verwendet werden. Analog kann während des Tages von den Komponenten abgegebene Wärme mit Hilfe des in dem zweiten, kleineren Fluidspeicher befindlichen Fluids gespeichert werden. Diese Wärme kann während der Nacht zur Erwärmung der jeweiligen Komponenten verwendet werden.

Der erfindungsgemäße Windpark umfasst eine Anzahl der zuvor beschriebenen, erfindungsgemäßen Windkraftanlagen, wobei mindestens zwei Windkraftanlagen mit einer gemeinsamen Vorrichtung zur Temperaturregulierung ausgestattet sind. Eine gleichzeitige Verwendung der Vorrichtung zur Temperaturregulierung für mehrere Windkraftanlagen senkt die Kosten und erhöht die Effizienz des Windparks. Zudem hat der erfindungsgemäße Windpark dieselben Eigenschaften und Vorteile wie die zuvor beschriebe erfindungsgemäße Windkraftanlage.

Das erfindungsgemäße Verfahren zur Temperaturregulierung bezieht sich auf eine Windkraftanlage, die mindestens eine zu kühlende oder zu erwärmende Komponente, mindestens einen thermisch isolierten Fluidspeicher und mindestens ein Leitungssystem umfasst. Im Rahmen des erfindungsgemäßen Verfahrens wird ein Fluid aus dem Fluidspeicher durch das Leitungssystem an der zu kühlenden oder zu erwärmenden Komponente vorbeigeleitet. Dabei wird Wärme zwischen der Komponente und dem Fluid ausgetauscht. Das Fluid wird anschließend zu dem Fluidspeicher zurückgeleitet. Vorteilhafterweise wird das Fluid durch das Leitungssystem gepumpt.

Das erfindungsgemäße Verfahren lässt sich insbesondere mit Hilfe der erfindungsgemäßen Windkraftanlage ausführen. Die Vorteile der erfindungsgemäßen Windkraftanlage stellen daher auch Vorteile des erfindungsgemäßen Verfahrens dar.

Die Wärme wird von mindestens einer Wärmepumpe und/oder mindestens einem Erdwärmeübertrager auf das Fluid und/oder auf den Fluidspeicher übertragen. Alternativ dazu kann Wärme von dem Fluid und/oder dem Fluidspeicher auf mindestens eine Wärmepumpe und/oder mindestens einen Erdwärmeübertrager übertragen werden. Beispielsweise kann die Wärmeübertragung von oder auf einen Bereich des Leitungssystems erfolgen, wobei das Leitungssystem seinerseits das in ihm befindliche Fluid erwärmt beziehungsweise abkühlt.

Vorzugsweise kann eine Erdwärmesonde oder ein Erdwärmekollektor als Erdwärmeübertrager verwendet werden. Zu den Vorteilen der Erdwärmesonde beziehungsweise des Erdwärmekollektors wird auf die im Rahmen der erfindungsgemäßen Vorrichtung gemachten Ausführungen verwiesen.

Beispielsweise kann die Komponente während einer ersten Zeitspanne gekühlt werden, wobei Wärme von der Komponente auf das Fluid übertragen wird. Die auf das Fluid übertragene Wärme kann mit Hilfe des thermisch isolierten Fluidspeichers gespeichert werden. Zusätzlich oder alternativ dazu kann die Komponente während einer zweiten Zeitspanne erwärmt werden. Dabei kann mit Hilfe des thermisch isolierten Fluidspeichers gespeicherte Wärme von dem Fluid auf die Komponente übertragen werden. Bei der ersten Zeitspanne kann es sich beispielsweise um den Zeitraum eines Tages, beispielsweise zwischen 8 und 16 Stunden, vorzugsweise zwischen 11 und 13 Stunden, und bei der zweiten Zeitspanne um den Zeitraum einer Nacht, beispielsweise zwischen 8 und 16 Stunden, vorzugsweise zwischen 11 und 13 Stunden, handeln. Weiterhin kann es sich bei der ersten Zeitspanne um den Zeitraum eines Sommers, beispielsweise zwischen 3 und 9 Monaten, vorzugsweise zwischen 5 und 7 Monaten, und bei der zweiten Zeitspanne um den Zeitraum eines Winters, beispielsweise zwischen 3 und 9 Monaten, vorzugsweise zwischen 5 und 7 Monaten, handeln.

Insbesondere kann während der ersten Zeitspanne das Fluid von dem Fluidspeicher zu der mindestens einen Wärmepumpe und/oder dem mindestens einen Erdwärmeübertrager geleitet und dort gekühlt werden, bevor es zu der Komponente geleitet wird. Zusätzlich oder alternativ dazu kann das Fluid während der zweiten Zeitspanne von dem Fluidspeicher zu der mindestens einen Wärmepumpe und/oder dem mindestens einen Erdwärmeübertrager geleitet und dort erwärmt werden, bevor es zu der Komponente geleitet wird. Die zusätzliche Verwendung einer Wärmepumpe und/oder eines Erdwärmeübertragers erhöht die Effizienz des erfindungsgemäßen Verfahrens.

Weitere Eigenschaften, Merkmale und Vorteile der vorliegenden Erfindung werden im Folgenden anhand eines Ausführungsbeispiels unter Bezugnahme auf die beigefügten Figuren näher erläutert. Die beschriebenen Merkmale sind dabei sowohl einzeln als auch in Kombination miteinander vorteilhaft.
- Figur 1: zeigt schematisch eine erfindungsgemäße Windkraftanlage mit einer ersten Variante einer Vorrichtung zur Temperaturregulierung.
- Figur 2: zeigt schematisch eine erfindungsgemäße Windkraftanlage mit einer zweiten Variante einer Vorrichtung zur Temperaturregulierung.
- Figur 3: zeigt schematisch eine erfindungsgemäße Windkraftanlage mit einer dritten Variante einer Vorrichtung zur Temperaturregulierung.

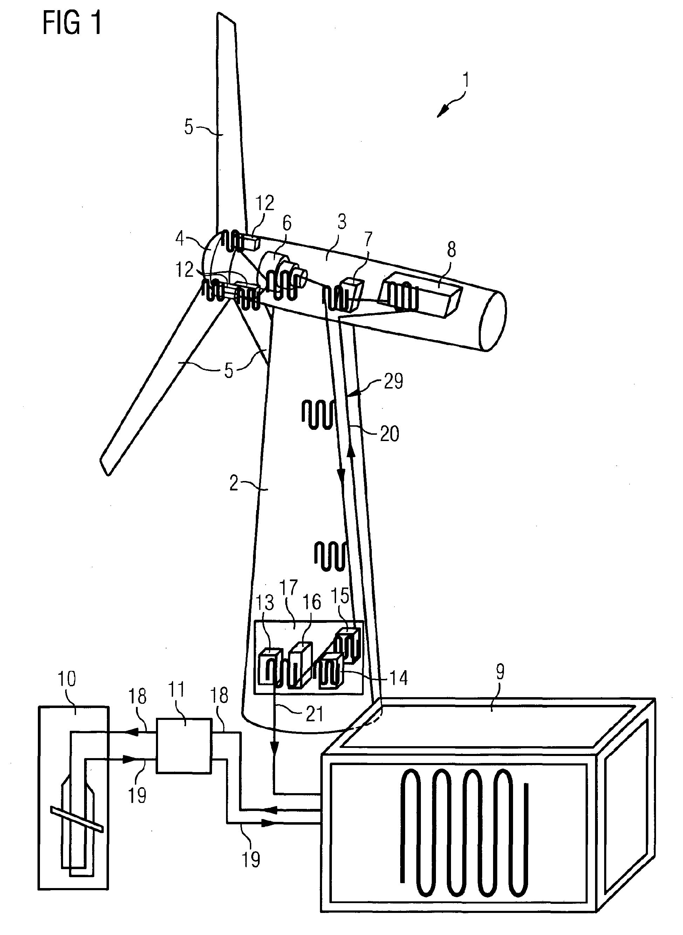

Im Folgenden werden verschiedene Ausführungsvarianten der vorliegenden Erfindung anhand der Figuren 1 bis 3 näher erläutert. Die Figur 1 zeigt schematisch eine Windkraftanlage 1. Die Windkraftanlage 1 umfasst einen Turm 2, eine Gondel 3 und eine Rotornabe 4. An der Rotornabe 4 sind drei Rotorblätter 5 befestigt. Die Rotornabe 4 ihrerseits ist an der Gondel 3 befestigt. Die Gondel 3 ist auf dem Turm 2 angeordnet.

Die Windkraftanlage 1 umfasst weiterhin Motoren 12 zum Verstellen der Rotorblätter 5. Die Motoren 5 sind vorzugsweise im Bereich der Rotornabe 4 angeordnet. Zudem umfasst die Windkraftanlage 1 ein Getriebe 6, eine Bremse 7 und einen Generator 8. Das Getriebe 6, die Bremse 7 und der Generator 8 sind im Inneren der Gondel 3 angeordnet.

Darüber hinaus umfasst die Windkraftanlage 1 eine Vorrichtung 17 zur Regelung der Frequenz des von der Windkraftanlage 1 erzeugten Wechselstromes. Die Vorrichtung 17 zur Frequenzregelung ist im Bereich des Fußes des Turmes 2 angeordnet. Alternativ dazu kann die Vorrichtung 17 zur Frequenzreglung auch innerhalb der Gondel 3 oder außerhalb der Windkraftanlage 1 angeordnet sein. Die Vorrichtung 17 zur Frequenzregelung umfasst beispielsweise einen Frequenzumwandler 13 und/oder einen Transformator 14 und/oder einen Gleichrichter 15 und/oder einen Filter 16. Die genannten Elemente 13, 14, 15, 16 der Vorrichtung 17 zur Frequenzregelung können auch teilweise im Bereich des Fußes des Turmes 2 und teilweise innerhalb der Gondel 3 angeordnet sein.

Die Windkraftanlage 1 umfasst zudem eine Vorrichtung zur Temperaturregulierung. Die Vorrichtung zur Temperaturregulierung umfasst einen Fluidspeicher 9, beispielsweise einen Wasserspeicher. Der Fluidspeicher, beziehungsweise der Wasserspeicher ist thermisch isoliert. Der Fluidspeicher 9 ist mit einem Leitungssystem 29 verbunden. Das Leitungssystem 29 umfasst einen ersten Fluidkanal 20 und einen zweiten Fluidkanal 21.

Der Fluidspeicher 9 ist mit dem ersten Fluidkanal 20 verbunden, durch den ein Fluid von dem Fluidspeicher 9 zu mindestens einer bezüglich ihrer Temperatur zu regulierenden Komponente der Windkraftanlage 1 geleitet werden kann. Bei der genannten Komponente kann es sich beispielsweise um einen Motor 12 zur Verstellung eines oder mehrere Rotorblätter 5, das Getriebe 6, die Bremse 7, den Generator 8 oder eine Komponente der Vorrichtung 17 zur Frequenzregelung handeln. Insbesondere kann es sich um einen Frequenzumwandler 13, einen Transformator 14, einen Gleichrichter 15 oder einen Filter 16 handeln. Weiterhin kann es sich bei der Komponente der Windkraftanlage 1 um einen Teil des Turmes 2 handeln.

Das mit Hilfe des ersten Fluidkanals 20 zu der mindestens einen Komponente geleitete Fluid wird anschließend an der Komponente so vorbeigeleitet, dass ein Wärmeaustausch zwischen dem Fluid und der mindestens einen Komponente stattfindet. Anschließend wird das Fluid durch den zweiten Fluidkanal 21 zu dem thermisch isolierten Fluidspeicher 9 zurückgeleitet.

Grundsätzlich ist das den ersten Fluidkanal 20 und den zweiten Fluidkanal 21 umfassende Leitungssystem 29 so ausgestaltet, dass das Leitungssystem 29 im Bereich der mindestens einen Komponente in thermischer Verbindung mit dieser Komponente steht, wobei ein Wärmeaustausch zwischen der mindestens einen Komponente und dem in dem Leitungssystem beziehungsweise in dem jeweiligen Fluidkanal befindlichen Fluid möglich ist. Vorzugsweise ist dieser Bereich des Leitungssystems 29 spiralförmig oder in Form von Windungen an der Außenwand der jeweiligen Komponente entlang geführt.

Im vorliegenden Ausführungsbeispiel wird zunächst kaltes Wasser aus dem Fluidspeicher 9 durch den ersten Fluidkanal 20 im Inneren des Turmes 2 zur Gondel 3 und dort zum Generator 8, zur Bremse 7, zum Getriebe 6 und zu den Motoren zur Blattverstellung 12 geleitet. Diese Komponenten werden mit Hilfe des kalten Wassers gekühlt. Anschließend wird das Wasser durch Bereiche des Turmes 2 zu der Vorrichtung 17 zur Frequenzregelung weitergeleitet. Im Rahmen der Vorrichtung zur Frequenzregelung 17 wird das Wasser zu dem Gleichrichter 15, dem Transformator 14, dem Filter 16 und dem Frequenzumwandler 13 geleitet, wobei die genannten Komponenten gekühlt werden. Durch den Wärmeaustausch zwischen dem Wasser und den genannten, zu kühlenden Komponenten wird das Wasser erwärmt. Das warme Wasser wird anschließend durch den zweiten Fluidkanal 21 zu dem Fluidspeicher 9 zurückgeführt.

Die genannten, zu kühlenden Elemente der Windkraftanlage 1 können auch in einer anderen Reihenfolge gekühlt werden. Zudem können auch nur einzelne der genannten Elemente gekühlt werden. Das Fluid, insbesondere das Wasser, kann zum Beispiel mit Hilfe einer Pumpe durch das Leitungssystem 29 geleitet werden.

Der Fluidspeicher 9 kann zusätzlich mit einer Wärmepumpe 11 und/oder einem Erdwärmeübertrager 10 verbunden sein. Hierbei ist der Fluidspeicher 9 mit Hilfe eines dritten Fluidkanals 18 mit der Wärmepumpe 11 und/oder dem Erdwärmeübertrager 10 verbunden. Durch den dritten Fluidkanal 18 kann Fluid, zum Beispiel Wasser, aus dem Fluidspeicher 9 zu der Wärmepumpe 11 und/oder dem Erdwärmeübertrager 10 geleitet werden. Das mit Hilfe der Wärmepumpe 11 und/oder dem Erdwärmeübertrager 10 erwärmte beziehungsweise abgekühlte Fluid wird anschließend durch einen vierten Fluidkanal 19 zu dem Fluidspeicher 9 zurückgeleitet. Vorteilhafterweise wird ausschließlich ein Erdwärmeübertrager 10 verwendet und auf eine zusätzliche Wärmepumpe 11 verzichtet. Bei dem Erdwärmeübertrager 10 kann es sich zum Beispiel um eine Erdwärmesonde oder einen Erdwärmekollektor handeln.

Im Folgenden werden verschiedene Betriebsmöglichkeiten der Vorrichtung zur Temperaturregulierung erläutert. In einem ersten Beispiel soll mindestens eine der oben genannten Komponenten der Windkraftanlage 1 erwärmt werden. Dies kann beispielsweise im Winter oder während der Nacht erforderlich sein. Zu diesem Zweck wird das in dem Fluidspeicher 9 befindliche Fluid mit Hilfe des Erdwärmeübertragers 10 und/oder der Wärmepumpe 11 erwärmt. Das warme Fluid wird anschließend durch den ersten Fluidkanal 20 zu der jeweiligen Komponente geleitet.

Im Bereich der Komponente wird Wärme von dem Fluid auf die Komponente übertragen. Dabei kühlt sich das Fluid ab. Anschließend wird das abgekühlte Fluid durch den zweiten Fluidkanal 21 in den Fluidspeicher 9 zurückgeleitet. Das zurückgeleitete Fluid wird nun wiederum mit Hilfe des Erdwärmeübertragers 10 und/oder der Wärmepumpe 11 erwärmt und steht dem Kreislauf anschließend erneut zur Verfügung. Alternativ dazu kann der abgekühlte Fluid direkt dem Erdwärmeübertrager 10 und/oder der Wärmepumpe 11 zugeführt und dort zunächst erwärmt werden bevor es in den Fluidspeicher 9 zurückgeleitet wird.

In einem zweiten Beispiel soll mindestens eine der oben genannten Komponenten gekühlt werden. Dies kann zum Beispiel im Sommer, während des Tages oder bei starker Belastung erforderlich sein. In diesem Fall wird das in den Fluidspeicher 9 befindliche Fluid mit Hilfe des Erdwärmeübertragers 10 und/oder der Wärmepumpe 11 gekühlt. Das gekühlte Fluid wird durch den ersten Fluidkanal 20 zu der jeweiligen zu kühlenden Komponente geleitet.

Im Bereich der jeweiligen Komponente wird Wärme von der Komponente auf das Fluid übertragen, wobei sich das Fluid erwärmt. Das erwärmte Fluid wird anschließend durch den zweiten Fluidkanal 21 zu dem Fluidspeicher 9 zurückgeleitet. Das zu dem Fluidspeicher 9 zurückgeleitete erwärmte Fluid wird nun mit Hilfe des Erdwärmeübertragers und/oder der Wärmepumpe wieder abgekühlt und steht dem Kreislauf erneut zur Verfügung. Alternativ dazu kann der erwärmte Fluid direkt dem Erdwärmeübertrager 10 und/oder der Wärmepumpe 11 zugeführt und dort zunächst abgekühlt werden bevor es in den Fluidspeicher 9 zurückgeleitet wird.

Vorzugsweise ist der Fluidspeicher 9 so ausgelegt, dass während der Zeitspanne, in der die jeweilige Komponente beziehungsweise die jeweiligen Komponenten gekühlt werden müssen, die von der Komponente beziehungsweise den Komponenten abgegebene Wärme in dem Fluidspeicher 9 gespeichert wird und die gespeicherte Wärme steht dann während der Zeitspanne, in welcher die Komponente beziehungsweise die Komponenten erwärmt werden müssen, für die Erwärmung der Komponente beziehungsweise der Komponenten zur Verfügung. Dies lässt sich insbesondere auch ohne Hinzunahme einer Wärmepumpe 11 oder eines Erdwärmeübertragers 10 realisieren.

Beispielweise kann in dem Fluidspeicher 9 befindliches kaltes Fluid während des Sommers zur Kühlung der mindestens einen Komponente verwendet werden, wobei sich das in dem Fluidspeicher 9 befindliche Fluid in Folge der Wärmeübertragung von der mindestens einen Komponente auf das Fluid übertragenen Wärme erwärmt. Zu Beginn des Winters hat sich das in dem Fluidspeicher 9 gespeicherte Fluid soweit erwärmt, dass die gespeicherte Wärme ausreicht, um die mindestens eine Komponente während des Winters zu erwärmen. Dabei wird die in dem Fluid gespeicherte Wärme kontinuierlich auf die mindestens eine Komponente übertragen und das in dem Fluidspeicher 9 gespeicherte Fluid auf diese Weise kontinuierlich abgekühlt. Am Ende des Winters ist das Fluid dann soweit abgekühlt, dass es für eine erneute Kühlung der mindestens einen Komponente während des Sommers zur Verfügung steht.

Entsprechend kann der Fluidspeicher 9 auch so ausgelegt sein, dass während des Tages das in ihm befindliche Fluid durch Kühlung der mindestens einen Komponente erwärmt wird. Das erwärmte Fluid wird anschließend während der Nacht zur Erwärmung der mindestens einen Komponente verwendet. Das dabei wieder abgekühlte Fluid steht dann am nächsten Tag erneut zur Kühlung der mindestens einen Komponente zur Verfügung.

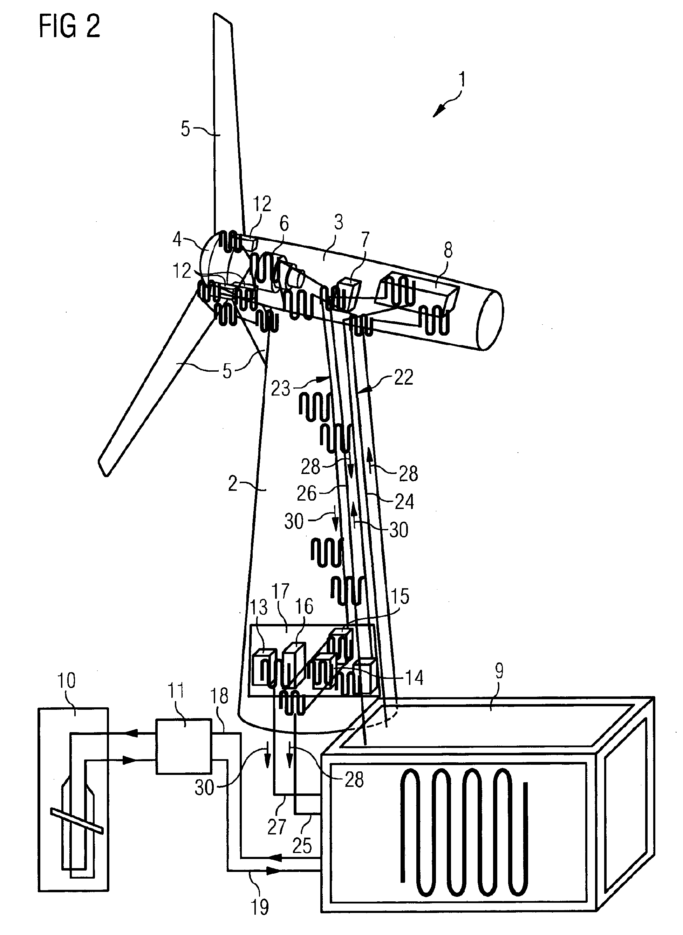

Eine weitere Ausführungsvariante wird nun anhand der Figur 2 näher erläutert. Elemente, die Elementen aus der Figur 1 entsprechen, sind mit denselben Bezugsziffern versehen und werden nicht erneut im Detail beschrieben. Die Figur 2 unterscheidet sich von der Figur 1 dadurch, dass die Vorrichtung zur Temperaturregelung zwei separate Leitungssysteme umfasst, die als Kühlkreislauf 22 und als separater Heizkreislauf 23 ausgestaltet sind. Bei diesen Kreisläufen 22, 23 kann es sich sowohl um separate Kreisläufe, als auch um Teilkreisläufe eines Gesamtkreislaufes handeln.

Im Rahmen des Kühlkreislaufes 22 wird kaltes Fluid in Strömungsrichtung 28 durch eine Kühlfluidzuleitung 24 zu mindestens einer zu kühlenden Komponente geleitet. Nach erfolgter Wärmeübertragung von der zu kühlenden Komponente auf das Fluid wird dieses durch eine Kühlfluidrückleitung 25 zu dem Fluidspeicher 9 zurückgeführt. Analog wird ein warmes Fluid in Strömungsrichtung 30 durch eine Heizfluidzuleitung 26 zu mindestens einer zu erwärmenden Komponente geleitet. Nach erfolgter Wärmeübertragung von dem warmen oder heißem Fluid auf die mindestens eine zu erwärmende Komponente wird das Fluid durch eine Heizfluidrückleitung 27 zu dem Fluidspeicher 9 zurückgeleitet. Der Fluidspeicher 9 kann insbesondere so ausgestaltet sein, dass das im Rahmen des Kühlkreislaufes 22 erwärmte Kühlfluid dem Heizkreislauf 23 zur Verfügung gestellt wird und/oder das im Rahmen des Heizkreislaufes abgekühlte Fluid dem Kühlkreislauf 22 zur Verfügung gestellt wird.

Das in der Figur 2 schematisch dargestellte System lässt sich insbesondere dann vorteilhaft anwenden, wenn einzelne Komponenten gekühlt werden müssen, während gleichzeitig andere Komponenten erwärmt werden müssen. Weiterhin kann der Fluidspeicher 9 so ausgestaltet sein, dass er einen Bereich zur Speicherung von heißem oder erwärmtem Fluid und einen weiteren Bereich zur Speicherung von kaltem Fluid umfasst. In diesem Fall kann während des Betriebes des Kühlkreislaufes 22 Fluid aus dem Speicherbereich für kaltes Fluid entnommen werden und das zurückgeführte erwärmte Fluid dem Speicherbereich für heißes oder warmes Fluid zugeführt werden. Umgekehrt kann für den Heizkreislauf 23 heißes Fluid aus dem Speicherbereich für heißes oder warmes Fluid entnommen werden. Das infolge der Erwärmung der jeweiligen Komponente beziehungsweise der Komponenten abgekühlte Fluid kann anschließend dem Speicherbereich für kaltes Fluid zugeführt werden.

Das in der Figur 2 gezeigte System kann wiederum zusätzlich einen Erdwärmeübertrager und/oder eine Wärmepumpe 11 umfassen. Diesbezüglich wird auf die im Zusammenhang mit der Beschreibung von Figur 1 gemachten Ausführungen verwiesen.

Grundsätzlich können im Rahmen aller Ausführungsvarianten verschiedene Fluide zum Einsatz kommen. So kann zum Beispiel für den Kühlkreislauf 22 ein anderes Fluid verwendet werden, als für den Heizkreislauf 23.

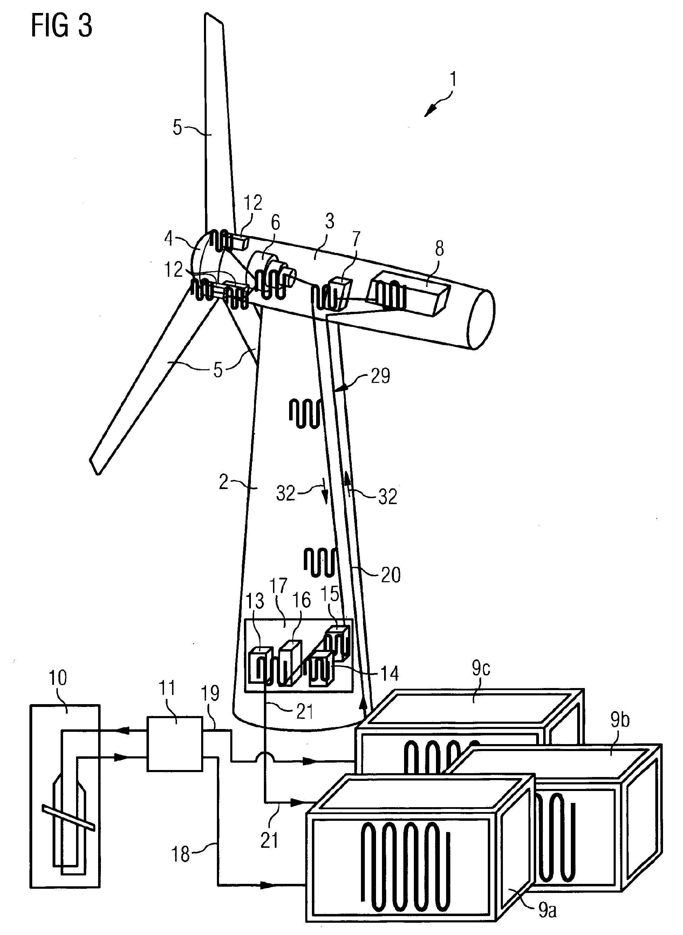

Eine weitere Ausführungsvariante ist in der Figur 3 gezeigt. Elemente, die Elementen aus den Figuren 1 und 2 entsprechen, sind mit denselben Bezugsziffern versehen und werden nicht erneut im Detail beschrieben. Die Figur 3 unterscheidet sich von der Figur 1 dadurch, dass die Vorrichtung zur Temperaturregulierung mehrere Fluidspeicher 9a, 9b und 9c umfasst. In der vorliegenden Ausführungsvariante umfasst die Vorrichtung drei Fluidspeicher 9a, 9b und 9c. Die Anzahl der Fluidspeicher 9 kann entsprechend den Anforderungen, insbesondere den Umgebungsbedingungen, gewählt werden. Ebenso können die einzelnen Fluidspeicher 9 entsprechend den Umgebungsbedingungen, der Größe und den Anforderungen der Windkraftanlage 1 angepasst werden.

Weiterhin können die einzelnen Fluidspeicher 9, 9a, 9b und 9c miteinander verbunden sein. Insbesondere kann die Ausgestaltung mit mehreren Fluidspeichern 9, 9a, 9b und 9c vorteilhaft mit der im Zusammenhang mit der Figur 2 beschriebenen Ausführungsvariante kombiniert werden. So kann zum Beispiel ein erster Fluidspeicher 9a mit dem Kühlkreislauf 22 verbunden sein, während ein zweiter Fluidspeicher 9b mit dem Heizkreislauf 23 verbunden ist. Beide Fluidspeicher 9a und 9b können in diesem Fall zusätzlich mit mindestens einem Erdwärmeübertrager 10 und/oder mindestens einer Wärmepumpe 11 verbunden sein. Diesbezüglich wird auf die Beschreibung zur Figur 1 verwiesen.

Im Zusammenhang mit der Figur 3 wird zum Beispiel ein in dem Fluidspeicher 9c befindliches Fluid zunächst mit Hilfe des Erdwärmeübertragers 10 und/oder der Wärmepumpe 11 erwärmt. Das erwärmte Fluid wird anschließend in Strömungsrichtung 32 durch den ersten Fluidkanal 20 zu mindestens einer zu erwärmenden Komponente geleitet. Die in dem Fluid gespeicherte Wärme wird auf die jeweilige Komponente übertragen. Das dabei abgekühlte Fluid wird anschließend durch den zweiten Fluidkanal 21 in den ersten Fluidspeicher 9a geleitet. Das in dem ersten Fluidspeicher 9a befindliche kühle Fluid wird anschließend durch den dritten Fluidkanal 18 zu der Wärmepumpe 11 und/oder zu dem Wärmeübertrager 10 geleitet und dort wieder erwärmt. Das erwärmte Fluid wird daraufhin durch den vierten Fluidkanal 19 wieder zu dem dritten Fluidspeicher 9c geleitet und steht dem Kreislauf erneut zur Verfügung. Der zweite Fluidspeicher 9b kann zum Beispiel als zusätzlicher Speicher zur Überbrückung in Zeiten eines erhöhten Bedarfes an Kühlfluid beziehungsweise Heizfluid verwendet werden.

Die im Zusammenhang mit den Figuren 1 bis 3 beschriebenen Ausgestaltungsmöglichkeiten lassen sich beliebig miteinander kombinieren und sind sowohl einzeln als auch in Kombination miteinander vorteilhaft.

Die beschriebene Windkraftanlage 1 kann Teil eines mehrere Windkraftanlagen umfassenden Windparks sein, wobei jede Windkraftanlage mit einer Vorrichtung zur Temperaturregulierung ausgestaltet sein kann oder eine Vorrichtung zur Temperaturregulierung für mehrere Windkraftanlagen verwendet wird.

## Patentansprüche

1. Windkraftanlage (1), welche mindestens eine bezüglich ihrer Temperatur zu regulierende Komponente (2, 6, 7, 8, 12, 13, 14, 15, 16) und eine Vorrichtung zur Temperaturregulierung umfasst, wobei
die Vorrichtung zur Temperaturregulierung mindestens einen thermisch isolierten Fluidspeicher (9, 9a, 9b, 9c), mindestens ein Leitungssystem (22, 23, 29), welches den Fluidspeicher (9, 9a, 9b, 9c) mit der mindestens einen Komponente (2, 6, 7, 8, 12, 13, 14, 15, 16) verbindet, und eine Vorrichtung zum Transport eines Fluids durch das Leitungssystem (22, 23, 29) umfasst, wobei die mindestens eine Komponente (2, 6, 7, 8, 12, 13, 14, 15, 16) und das Leitungssystem (22, 23, 29) miteinander in thermischer Verbindung stehen,
**dadurch gekennzeichnet, dass**
die Vorrichtung zur Temperaturregulierung mindestens eine Wärmepumpe (11) und/oder mindestens einen Erdwärmeübertrager (10) umfasst, die bzw. der in thermischer Verbindung mit dem Leitungssystem (22, 23, 29) und/oder dem Fluidspeicher (9, 9a, 9b, 9c) steht und ausgelegt ist zur Übertragung von Wärme auf das Fluid und/oder den Fluidspeicher (9, 9a, 9b, 9c) oder zur Übertragung von Wärme von dem Fluid und/oder dem Fluidspeicher (9, 9a, 9b, 9c) auf die Wärmepumpe (11) und/oder den Erdwärmeübertrager (10).

2. Windkraftanlage (1) nach Anspruch 1,
**dadurch gekennzeichnet, dass**
die mindestens eine Komponente (2, 6, 7, 8, 12, 13, 14, 15, 16) für einen bestimmten Betriebstemperaturbereich ausgelegt ist.

3. Windkraftanlage (1) nach Anspruch 1 oder 2,
**dadurch gekennzeichnet, dass**
das mindestens eine Leitungssystem (22, 23, 29) als Kreislauf ausgestaltet ist.

4. Windkraftanlage (1) nach einem der Ansprüche 1 bis 3,
**dadurch gekennzeichnet, dass**
es sich bei dem Fluid um eine Flüssigkeit handelt.

5. Windkraftanlage (1) nach einem der Ansprüche 1 bis 4,
**dadurch gekennzeichnet, dass**
es sich bei der mindestens einen Komponente um eine Turbine, einen Turm (2), eine Gondel (3), ein Getriebe (6), eine Bremse (7), ein Getriebegehäuse, einen Generator (8), einen Frequenzumwandler (13), einen Motor, einen Motor (12) zur Rotorblattverstellung, einen Transformator (14), einen Gleichrichter (15), einen Filter (16) oder eine Vorrichtung zur Frequenzregelung handelt.

6. Windkraftanlage (1) nach einem der Ansprüche 1 bis 5,
**dadurch gekennzeichnet, dass**
der Erdwärmeübertrager (10) als Erdwärmesonde oder als Erdwärmekollektor ausgestaltet ist.

7. Windkraftanlage (1) nach einem der Ansprüche 1 bis 6,
**dadurch gekennzeichnet, dass**
die Vorrichtung zur Temperaturregulierung mindestens zwei Fluidspeicher (9, 9a, 9b, 9c) umfasst.

8. Windkraftanlage (1) nach Anspruch 7,
**dadurch gekennzeichnet, dass**
mindestens zwei der Fluidspeicher (9, 9a, 9b, 9c) eine unterschiedliche Größe aufweisen und/oder jeweils mit unterschiedlichen Fluiden gefüllt sind.

9. Windkraftanlage (1) nach einem der Ansprüche 1 bis 8,
**dadurch gekennzeichnet, dass**
die Vorrichtung zur Temperaturregulierung mindestens zwei voneinander unabhängige Leitungssysteme (22, 23, 29) umfasst.

10. Windpark mit einer Anzahl Windkraftanlagen (1) nach einem der Ansprüche 1 bis 9, wobei mindestens zwei Windkraftanlagen (1) mit einer gemeinsamen Vorrichtung zur Temperaturregulierung ausgestattet sind.

11. Verfahren zur Temperaturregulierung mindestens einer zu kühlenden oder zu erwärmenden Komponente (2, 6, 7, 8, 12, 13, 14, 15, 16) einer Windkraftanlage (1), wobei die Windkraftanlage (1) mindestens einen thermisch isolierten Fluidspeicher (9, 9a, 9b, 9c) und mindestens ein Leitungssystem (22, 23, 29) umfasst, wobei
ein Fluid aus dem Fluidspeicher (9, 9a, 9b, 9c) durch das Leitungssystem (22, 23, 29) an der zu kühlenden oder zu erwärmenden Komponente (2, 6, 7, 8, 12, 13, 14, 15, 16) vorbei geleitet wird, wobei Wärme zwischen der Komponente (2, 6, 7, 8, 12, 13, 14, 15, 16) und dem Fluid ausgetauscht wird, und das Fluid anschließend zu dem Fluidspeicher (9, 9a, 9b, 9c) zurückgeleitet wird,
**dadurch gekennzeichnet, dass**
Wärme von mindestens einer Wärmepumpe (11) und/oder mindestens einem Erdwärmeübertrager (10) auf das Fluid und/oder den Fluidspeicher (9, 9a, 9b, 9c) übertragen wird oder Wärme von dem Fluid und/oder dem Fluidspeicher (9, 9a, 9b, 9c) auf mindestens eine Wärmepumpe (11) und/oder mindestens einen Erdwärmeübertrager (10) übertragen wird.

12. Verfahren nach Anspruch 11,
**dadurch gekennzeichnet, dass**
während einer ersten Zeitspanne die Komponente (2, 6, 7, 8, 12, 13, 14, 15, 16) gekühlt wird, wobei Wärme von der Komponente (2, 6, 7, 8, 12, 13, 14, 15, 16) auf das Fluid übertragen wird und die auf das Fluid übertragene Wärme mithilfe des thermisch isolierten Fluidspeichers (9, 9a, 9b, 9c) gespeichert wird und/oder während einer zweiten Zeitspanne die Komponente (2, 6, 7, 8, 12, 13, 14, 15, 16) erwärmt wird, wobei mithilfe des thermisch isolierten Fluidspeichers (9, 9a, 9b, 9c) gespeicherte Wärme von dem Fluid auf die Komponente (2, 6, 7, 8, 12, 13, 14, 15, 16) übertragen wird.

13. Verfahren nach Anspruch 12,
**dadurch gekennzeichnet, dass**
während der ersten Zeitspanne das Fluid von dem Fluidspeicher (9, 9a, 9b, 9c) zu der Wärmepumpe und/oder dem Erdwärmeübertrager geleitet und dort gekühlt wird bevor es zu der Komponente (2, 6, 7, 8, 12, 13, 14, 15, 16) geleitet wird und/oder während der zweiten Zeitspanne das Fluid von dem Fluidspeicher (9, 9a, 9b, 9c) zu der Wärmepumpe und/oder dem Erdwärmeübertrager geleitet und dort erwärmt wird bevor es zu der Komponente (2, 6, 7, 8, 12, 13, 14, 15, 16) geleitet wird.

## Claims

1. Wind power plant (1), which comprises at least one component (2, 6, 7, 8, 12, 13, 14, 15, 16) to be regulated in respect of the temperature thereof and a device for temperature regulation,
the device for temperature regulation comprising at least one thermally insulated fluid reservoir (9, 9a, 9b, 9c), at least one line system (22, 23, 29), which connects the fluid reservoir (9, 9a, 9b, 9c) to the at least one component (2, 6, 7, 8, 12, 13, 14, 15, 16), and a device for transporting a fluid through the line system (22, 23, 29), the at least one component (2, 6, 7, 8, 12, 13, 14, 15, 16) and the line system (22, 23, 29) being in thermal connection with one another, **characterized in that**
the device for temperature regulation comprises at least one heat pump (11) and/or at least one geothermal heat exchanger (10), which is/are in thermal connection with the line system (22, 23, 29) and/or the fluid reservoir (9, 9a, 9b, 9c) and is/are designed for the transfer of heat to the fluid and/or the fluid reservoir (9, 9a, 9b, 9c) or for the transfer of heat from the fluid and/or the fluid reservoir (9, 9a, 9b, 9c) to the heat pump (11) and/or the geothermal heat exchanger (10).

2. Wind power plant (1) according to Claim 1,
**characterized in that**
the at least one component (2, 6, 7, 8, 12, 13, 14, 15, 16) is designed for a specific operating temperature range.

3. Wind power plant (1) according to Claim 1 or 2,
**characterized in that**
the at least one line system (22, 23, 29) is designed as a circuit.

4. Wind power plant (1) according to one of Claims 1 to 3,
**characterized in that**
the fluid is a liquid.

5. Wind power plant (1) according to one of Claims 1 to 4,
**characterized in that**
the at least one component is a turbine, a tower (2), a nacelle (3), a gear unit (6), a brake (7), a gear housing, a generator (8), a frequency converter (13), a motor, a motor (12) for rotor blade adjustment, a transformer (14), a rectifier (15), a filter (16) or a device for frequency control.

6. Wind power plant (1) according to one of Claims 1 to 5,
**characterized in that**
the geothermal heat exchanger (10) is designed as a borehole heat exchanger or as a geothermal collector.

7. Wind power plant (1) according to one of Claims 1 to 6,
**characterized in that**
the device for temperature regulation comprises at least two fluid reservoirs (9, 9a, 9b, 9c).

8. Wind power plant (1) according to Claim 7,
**characterized in that**
at least two of the fluid reservoirs (9, 9a, 9b, 9c) are of a different size and/or are each filled with different fluids.

9. Wind power plant (1) according to one of Claims 1 to 8,
**characterized in that**
the device for temperature regulation comprises at least two mutually independent line systems (22, 23, 29).

10. Wind farm comprising a number of wind power plants (1) according to one of Claims 1 to 9, at least two wind power plants (1) being equipped with a common device for temperature regulation.

11. Method for regulating the temperature of at least one component (2, 6, 7, 8, 12, 13, 14, 15, 16) to be cooled or to be heated of a wind power plant (1), the wind power plant (1) comprising at least one thermally insulated fluid reservoir (9, 9a, 9b, 9c) and at least one line system (22, 23, 29),
a fluid being conducted from the fluid reservoir (9, 9a, 9b, 9c) through the line system (22, 23, 29) past the component (2, 6, 7, 8, 12, 13, 14, 15, 16) to be cooled or to be heated, heat being exchanged between the component (2, 6, 7, 8, 12, 13, 14, 15, 16) and the fluid, and the fluid subsequently being returned to the fluid reservoir (9, 9a, 9b, 9c), **characterized in that**
heat is transferred from at least one heat pump (11) and/or at least one geothermal heat exchanger (10) to the fluid and/or the fluid reservoir (9, 9a, 9b, 9c) or heat is transferred from the fluid and/or the fluid reservoir (9, 9a, 9b, 9c) to at least one heat pump (11) and/or at least one geothermal heat exchanger (10).

12. Method according to Claim 11,
**characterized in that**
during a first time period, the component (2, 6, 7, 8, 12, 13, 14, 15, 16) is cooled, heat being transferred from the component (2, 6, 7, 8, 12, 13, 14, 15, 16) to the fluid and the heat that is transferred to the fluid being stored with the aid of the thermally insulated fluid reservoir (9, 9a, 9b, 9c) and/or, during a second time period, the component (2, 6, 7, 8, 12, 13, 14, 15, 16) is heated, heat that is stored with the aid of the thermally insulated fluid reservoir (9, 9a, 9b, 9c) being transferred from the fluid to the component (2, 6, 7, 8, 12, 13, 14, 15, 16).

13. Method according to Claim 12,
**characterized in that**
during the first time period, the fluid is conducted from the fluid reservoir (9, 9a, 9b, 9c) to the heat pump and/or the geothermal heat exchanger and cooled there before it is conducted to the component (2, 6, 7, 8, 12, 13, 14, 15, 16) and/or, during the second time period, the fluid is conducted from the fluid reservoir (9, 9a, 9b, 9c) to the heat pump and/or the geothermal heat exchanger and heated there before it is conducted to the component (2, 6, 7, 8, 12, 13, 14, 15, 16).

## Revendications

1. Eolienne (1), qui comprend au moins un composant (2, 6, 7, 8, 12, 13, 14, 15, 16) à réguler en ce qui concerne sa température et un dispositif de régulation de la température, dans laquelle
le dispositif de régulation de la température comprend au moins un réservoir de fluide isolé thermiquement (9, 9a, 9b, 9c), au moins un système de conduites (22, 23, 29), lequel relie le réservoir de fluide (9, 9a, 9b, 9c) à l'au moins un composant (2, 6, 7, 8, 12, 13, 14, 15, 16), et un dispositif de transport d'un fluide à travers le système de conduites (22, 23, 29), dans lequel l'au moins un composant (2, 6, 7, 8, 12, 13, 14, 15, 16) et le système de conduites (22, 23, 29) sont en liaison thermique entre eux,
**caractérisée en ce que**
le dispositif de régulation de la température comprend au moins une pompe à chaleur (11) et/ou au moins un dispositif de transfert d'énergie géothermique (10), laquelle ou lequel est en liaison thermique avec le système de conduites (22, 23, 29) et/ou le réservoir de fluide (9, 9a, 9b, 9c) et est conçu (e) pour le transfert de chaleur vers le fluide et/ou le réservoir de fluide (9, 9a, 9b, 9c) ou pour le transfert de chaleur depuis le fluide et/ou le réservoir de fluide (9, 9a, 9b, 9c) vers la pompe à chaleur (11) et/ou le dispositif de transfert d'énergie géothermique (10).

2. Eolienne (1) selon la revendication 1,
**caractérisée en ce que**
l'au moins un composant (2, 6, 7, 8, 12, 13, 14, 15, 16) est conçu pour une plage de températures de service déterminée.

3. Eolienne (1) selon la revendication 1 ou 2,
**caractérisée en ce que**
l'au moins un système de canalisations (22, 23, 29) est conçu en tant que circuit.

4. Eolienne (1) selon l'une des revendications 1 à 3,
**caractérisée en ce que**
le fluide est un liquide.

5. Eolienne (1) selon l'une des revendications 1 à 4,
**caractérisée en ce que**
l'au moins un composant est une turbine, un mât (2), une nacelle (3), un mécanisme d'entraînement (6), un frein (7), un carter du mécanisme d'entraînement, un générateur (8), un transformateur de fréquence (13), un moteur, un moteur (12) pour le déplacement des pales de rotor, un transformateur (14), un redresseur (15), un filtre (16) ou un dispositif de réglage de la fréquence.

6. Eolienne (1) selon l'une des revendications 1 à 5,
**caractérisée en ce que**
le dispositif de transfert d'énergie géothermique (10) est prévu en tant que sonde géothermique ou en tant que collecteur d'énergie géothermique.

7. Eolienne (1) selon l'une des revendications 1 à 6,
**caractérisée en ce que**
le dispositif de régulation de la température comprend au moins deux réservoirs de fluide (9, 9a, 9b, 9c).

8. Eolienne (1) selon la revendication 7,
**caractérisée en ce que**
deux des réservoirs de fluide (9, 9a, 9b, 9c) au moins présentent une taille différente et/ou sont respectivement remplis avec des fluides différents.

9. Eolienne (1) selon l'une des revendications 1 à 8,
**caractérisée en ce que**
le dispositif de régulation de la température comprend au moins deux systèmes de conduites (22, 23, 29) indépendants l'un de l'autre.

10. Parc éolien avec une pluralité d'éoliennes (1) selon l'une des revendications 1 à 9, dans lequel au moins deux éoliennes (1) sont pourvues d'un dispositif de régulation de la température commun.

11. Procédé de régulation de la température d'au moins un composant (2, 6, 7, 8, 12, 13, 14, 15, 16) à refroidir ou à réchauffer d'une éolienne (1), dans lequel l'éolienne (1) comprend au moins un réservoir de fluide isolé thermiquement (9, 9a, 9b, 9c) et au moins un système de conduites (22, 23, 29), dans lequel
un fluide en provenance du réservoir de fluide (9, 9a, 9b, 9c) est dirigé à travers le système de conduites (22, 23, 29) vers le composant (2, 6, 7, 8, 12, 13, 14, 15, 16) à refroidir ou à réchauffer, dans lequel la chaleur entre le composant (2, 6, 7, 8, 12, 13, 14, 15, 16) et le fluide est échangée, et le fluide est ensuite ramené vers le réservoir de fluide (9, 9a, 9b, 9c),
**caractérisé en ce que**
la chaleur d'au moins une pompe à chaleur (11) et/ou d'au moins un dispositif de transfert d'énergie géothermique (10) est transférée vers le fluide et/ou le réservoir de fluide (9, 9a, 9b, 9c) ou la chaleur du fluide et/ou du réservoir de fluide (9, 9a, 9b, 9c) est transférée vers au moins une pompe à chaleur (11) et/ou au moins un dispositif de transfert d'énergie géothermique (10).

12. Procédé selon la revendication 11,
**caractérisé en ce que**
pendant un premier intervalle de temps le composant (2, 6, 7, 8, 12, 13, 14, 15, 16) est refroidi, dans lequel la chaleur du composant (2, 6, 7, 8, 12, 13, 14, 15, 16) est transférée vers le fluide et la chaleur transférée vers le fluide est stockée à l'aide du réservoir de fluide isolé thermiquement (9, 9a, 9b, 9c) et/ou pendant un deuxième intervalle de temps le composant (2, 6, 7, 8, 12, 13, 14, 15, 16) est réchauffé, dans lequel à l'aide du réservoir de fluide isolé thermiquement (9, 9a, 9b, 9c) la chaleur stockée est transférée depuis le fluide vers le composant (2, 6, 7, 8, 12, 13, 14, 15, 16).

13. Procédé selon la revendication 12,
**caractérisé en ce que**
pendant le premier intervalle de temps le fluide est dirigé depuis le réservoir de fluide (9, 9a, 9b, 9c) vers la pompe à chaleur et/ou le dispositif de transfert d'énergie géothermique et y est refroidi avant d'être dirigé vers le composant (2, 6, 7, 8, 12, 13, 14, 15, 16) et/ou pendant le deuxième intervalle de temps le fluide est dirigé depuis le réservoir de fluide (9, 9a, 9b, 9c) vers la pompe à chaleur et/ou le dispositif de transfert d'énergie géothermique et y est réchauffé avant d'être dirigé vers le composant (2, 6, 7, 8, 12, 13, 14, 15, 16).
